# EUROPÄISCHE PATENTSCHRIFT

(11) **EP 1 462 556 B1**
(45) Veröffentlichungstag und Bekanntmachung des Hinweises auf die Patenterteilung: **18.05.2005**
(21) Anmeldenummer: 03006522.1
(22) Anmeldetag: 22.03.2003
(51) Int. Cl.: D04H 1/00, D04H 13/00, B32B 5/04, B32B 25/10

(54) **Verfahren zur Herstellung einer elastischen Verbundfolie mit textiler Oberfläche**
Method for producing an elastic laminate with a sheetlike surface
procédé de fabrication d' un laminé élastique dont la surface a un aspect textile

(43) Veröffentlichungstag der Anmeldung: 29.09.2004
(73) Patentinhaber: Nordenia Deutschland Gronau GmbH, 48599 Gronau (DE)
(72) Erfinder: Hamulski, Markus Dipl.-Ing., 48599 Gronau-Epe (DE); Schönbeck, Marcus Dipl.-Ing., 33775 Versmold (DE); Leuders, Josef, 48599 Gronau-Epe (DE)
(74) Vertreter: Albrecht, Rainer Harald, Dr.-Ing.

(56) Entgegenhaltungen:
- EP-A- 1 133 967
- EP-A- 1 138 472
- WO-A-01/54900
- US-A- 5 939 178
- US-A- 6 096 668

## Beschreibung

Die Erfindung betrifft ein Verfahren zur Herstellung einer elastischen Verbundfolie mit textiler Oberfläche.

Verbundfolien mit textiler Oberfläche werden zur Herstellung von Babywindeln, z. B. als Tapes oder elastisches Backsheet, Inkontinenzartikeln, Damenhygieneprodukten und dergleichen verwendet. Bei diesen Anwendungen kommt der textilen Oberfläche, die kostengünstig gefertigt werden muss, große Bedeutung zu. Dabei darf die textile Oberfläche die Elastizität der Folie nicht beeinträchtigen.

Bekannt sind Verbundmaterialien aus einer elastischen Trägerfolie und einem aufkaschierten Vliesstoff. Dieser bildet ein festes Gefüge, welches das Dehnungsverhalten des Verbundmaterials maßgebend beeinflusst. Verbundmaterialien aus einer elastischen Trägerfolie und einem aufkaschierten Vliesstoff müssen daher nach dem Kaschiervorgang beispielsweise durch Zerschneiden der aus Nonwovenmaterial bestehenden Deckschicht mechanisch aktiviert werden. Ferner ist zur Verbesserung der Elastizität die Verwendung von vorverstreckten textilen Materialien als Deckschichten von elastischen Verbundfolien bekannt.

Vor diesem technologischen Hintergrund liegt der Erfindung die Aufgabe zugrunde, ein Verfahren zur Herstellung eines Verbundmaterials anzugeben, das ohne Aktivierung elastisch ist und eine textile Oberfläche aufweist. Das Material soll sich durch ein hohes Dehnungsvermögen auszeichnen, wobei die textile Oberfläche sich auch bei einer großen Dehnung nicht ablösen darf.

Gegenstand der Erfindung und Lösung dieser Aufgabe ist ein Verfahren nach Anspruch 1. Erfindungsgemäß werden Kurzfasern mit einer Faserlänge von weniger als 6 mm in einem Luftstrom auf einem luftdurchlässigen Transportband zu einem Fasermaterial mit einem Auftragsgewicht zwischen 2 und 20 g/m² abgelegt und wird ein elastischer Träger, der in mindestens einer Richtung um mehr als 50 % elastisch dehnbar ist, mit dem auf dem Transportband aufliegenden Fasermaterial verbunden. Bei dem Träger kann es sich um eine elastische Folie oder einen elastischen Vliesstoff handeln. Es können Träger verwendet werden, die in mindestens einer Richtung um mehr als 250 % dehnbar sind. Bevorzugt ist ein Auftragsgewicht des Fasermaterials von etwa 10 g/m². Die Länge der Kurzfasern wird so gewählt, dass sich keine Überschneidungen bzw. Verflechtungen bilden können und kein festes Gefüge entsteht. Bevorzugt ist eine Faserlänge von weniger als 2 mm. Das Fasermaterial wird auf dem Transportband einem Kaschierwerk zugeführt und liegt auf dem Transportband auf, wenn das Material mit dem elastischen Träger thermisch oder durch Verkleben verbunden wird.

Nach dem erfindungsgemäßen Verfahren können auch elastische Verbundmaterialien hergestellt werden, die beidseitig mit einer textilen Oberfläche versehen sind. Dazu wird der elastische Träger auf beiden Seiten mit Fasermaterial beschichtet, das mit einem Auftragsgewicht zwischen 2 und 20 g/m² auf luftdurchlässigen Transportbändern abgelegt wird und auf den Transportbändern beiden Seiten des Trägers zugeführt wird.

Für das Fasermaterial können Naturfasern, z. B. Zellulosefasern, Baumwollfasern und dergleichen, Kunstfasern, beispielsweise aus Polyolefinen, Polyamiden, Polyester, Viskose und dergleichen sowie Fasermischungen aus Naturfasern und Kunstfasern verwendet werden. Gemäß einer bevorzugten Ausführung der Erfindung wird das Fasermaterial punktförmig mit dem elastischen Träger verbunden. Die punktförmige Verbindung kann durch Aufsprühen von Klebstoff oder punktförmigen Auftrag von Klebstoff z. B. mittels eines Druckverfahrens realisiert werden. Ein flächiger Klebstoffauftrag ist in Bereichen, die ein hohes Dehnungsvermögen besitzen sollen, zu vermeiden. Mit dem erfindungsgemäßen Verfahren kann ein Verbundmaterial mit einer textilen Oberfläche hergestellt werden, dessen Dehnungsverhalten durch das Dehnungsverhalten des elastischen Trägers bestimmt wird. Ohne weiteres können mit dem erfindungsgemäßen Verfahren Verbundmaterialien hergestellt werden, die trotz ihrer textilen Oberfläche eine Enddehnung von bis zu 600 % aufweisen. Dabei bestimmt der elastische Träger die Performance des Verbundes.

Als elastischer Träger kann eine Folienbahn verwendet werden, die von einer Rolle abgezogen und mit dem auf dem Transportband aufliegenden Fasermaterial verklebt oder thermisch verbunden wird. Als elastische Trägerfolie ist dabei auch eine perforierte bzw. atmungsaktive Folie einsetzbar. Bei Verwendung einer atmungsaktiven elastischen Trägerfolie bleibt in dem Folienverbund diese wichtige Eigenschaft erhalten. In weiterer Ausgestaltung der Erfindung, dass die elastische Trägerfolie ein- oder beidseitig mit einem Meltblown-Vliesstoff aus elastischen Fasern kaschiert wird, der zwischen der elastischen Trägerfolie und dem aus Kurzfasern bestehenden Fasermaterial angeordnet wird. Als elastisches Fasermaterial kommen insbesondere thermoplastische Elastomere und thermoplastische Polyurethane in Betracht. Mit dem beschriebenen Verfahren können Verbundfolien mit vier oder fünf Schichten dargestellt werden.

Anstelle einer elastischen Trägerfolie kann auch ein elastischer Vliesstoff als Träger zum Einsatz kommen. Das unter Verwendung eines elastischen Vliesstoffes als Träger hergestellte Verbundmaterial zeichnet sich durch eine sehr große Atmungsaktivität aus. Vorteilhaft ist auch, dass ein Meltblown-Vliesstoff aus thermoplastischen Elastomeren in der Regel eine klebrige Oberfläche aufweist und dem Verbundmaterial einen angenehmen textilen Touch verleiht. Vorzugsweise wird ein Vliesstoff aus Meltblown-Fasern als Träger verwendet, wobei die Fasern aus thermoplastischen Elastomeren oder thermoplastischen Polyurethanen bestehen. Als Träger kann ein vorgefertigter elastischer Vliesstoff verwendet werden, der - ähnlich wie eine Trägerfolie - von einer Rolle abgezogen und mit dem auf dem Transportband aufliegenden Fasermaterial verklebt oder thermisch verbunden wird. Alternativ besteht die Möglichkeit, dass das auf dem Transportband aufliegende Fasermaterial mit Meltblown-Fasern beschichtet wird, die aus einem oberhalb des Transportbandes angeordneten Meltblown-Balken austreten und unter Vliesstoffbildung auf dem Fasermaterial abgelegt werden. Der Verbund zwischen Faserschicht wird durch die Meltblown-Technik hergestellt. Im Rahmen der Erfindung liegt es schließlich, dass zwei Bahnen aus jeweils einem elastischen Vliesstoff und einer aus den Kurzfasern bestehenden Deckschicht zusammengeführt werden, wobei die Vliesstoffseiten miteinander verbunden werden.

Im Folgenden wird die Erfindung anhand einer lediglich ein Ausführungsbeispiel darstellenden Zeichnung erläutert. Es zeigen schematisch:
- **Fig. 1**: ein Verfahren zur Herstellung einer elastischen Verbundfolie mit textiler Oberfläche,
- **Fig. 2 bis 5**: weitere Ausgestaltungen des in Fig. 1 dargestellten Verfahrens.

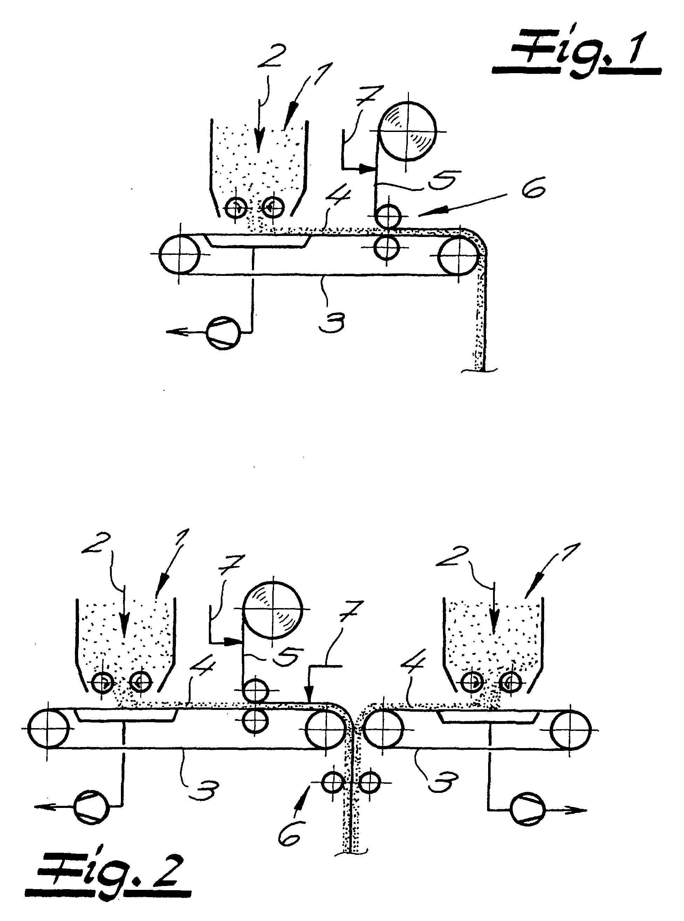

Das in den Figuren dargestellte Verfahren dient der Herstellung einer Bahn aus einem elastischen Verbundmaterial mit textiler Oberfläche, das sich durch ein hohes Dehnungsvermögen auszeichnet und beispielsweise zur Herstellung von Babywindeln, Inkontinenz- und Damenhygieneprodukten geeignet ist. Zur Herstellung der textilen Oberfläche werden Kurzfasern 1 mit einer Faserlänge von weniger als 6 mm, vorzugsweise einer Faserlänge von weniger als 2 mm, in einem Luftstrom 2 auf einem luftdurchlässigen Transportband 3 zu einem Fasermaterial 4 mit einem Auftragsgewicht zwischen 2 und 20 g/m² abgelegt. Bevorzugt ist ein Auftragsgewicht von ca. 10 g/m². Ein elastischer Träger 5, der in mindestens einer Richtung um mehr als 50 % elastisch dehnbar ist, wird einem Kaschierwerk 6 zugeführt und dort mit dem auf dem Transportband 3 aufliegenden Fasermaterial verklebt oder thermisch durch Thermobonden verbunden (Fig. 1). Als elastischer Träger 5 kann eine Folie oder ein elastischer Vliesstoff verwendet werden. Als Fasermaterial zur Erzeugung der textilen Oberfläche kommen beispielsweise Naturfasern, z. B. Baumwollfasern, oder Kunstfasern auf Basis von Polyolefinen, Polyamiden, Polyester, Viskose und dergleichen oder Fasermischungen aus Natur- und Kunstfasern in Betracht. Das Fasermaterial 4 wird vorzugsweise punktförmig mit dem elastischen Träger 5 verbunden. Der Klebstoff 7 wird auf dem elastischen Träger aufgesprüht oder z. B. durch Druckverfahren punktförmig aufgetragen. Eine durchgängige Klebstoffschicht ist zumindest in denjenigen Bereichen, die eine hohe Elastizität aufweisen sollen, zu vermeiden. Geeignet sind Hotmelt-Klebstoffe, PU-Klebstoffe und dergleichen, die zweckmäßig in einer Menge zwischen 1 und 10 g/m² aufgetragen werden.

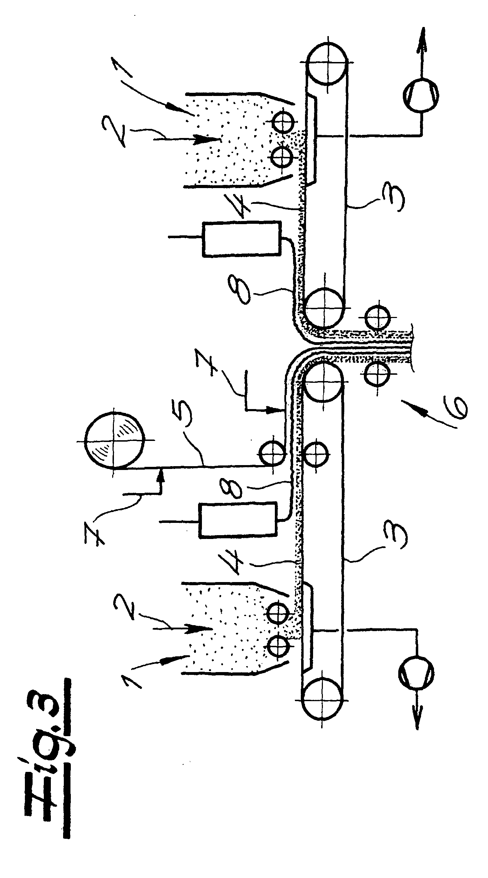

Bei der in Fig. 2 dargestellten Ausführung des erfindungsgemäßen Verfahrens wird der elastische Träger 5 auf beiden Seiten mit Fasermaterial 4 beschichtet, das mit einem Auftragsgewicht von 2 bis 20 g/m² auf luftdurchlässigen Transportbändern 3 abgelegt wird und auf den Transportbändern 3 beiden Seiten des Trägers 5 zugeführt wird.

Im Ausführungsbeispiel der Fig. 3 wird auf eine elastische Trägerfolie 5 ein- oder beidseitig ein Vliesstoff 8 aus elastischen Fasern aufkaschiert, der zwischen der elastischen Trägerfolie 5 und dem aus Kurzfasern bestehenden Fasermaterial 4 angeordnet wird. Bei dem Vliesstoff handelt es sich um Meltblown-Nonwovenmaterial mit Fasern aus thermoplastischen Elastomeren, thermoplastischen Polyurethanen oder thermoplastischem Nitrilkautschuk. Bei der in Fig. 3 dargestellten Verfahrensvariante können vier- oder fünfschichtige Verbundfolien hergestellt werden.

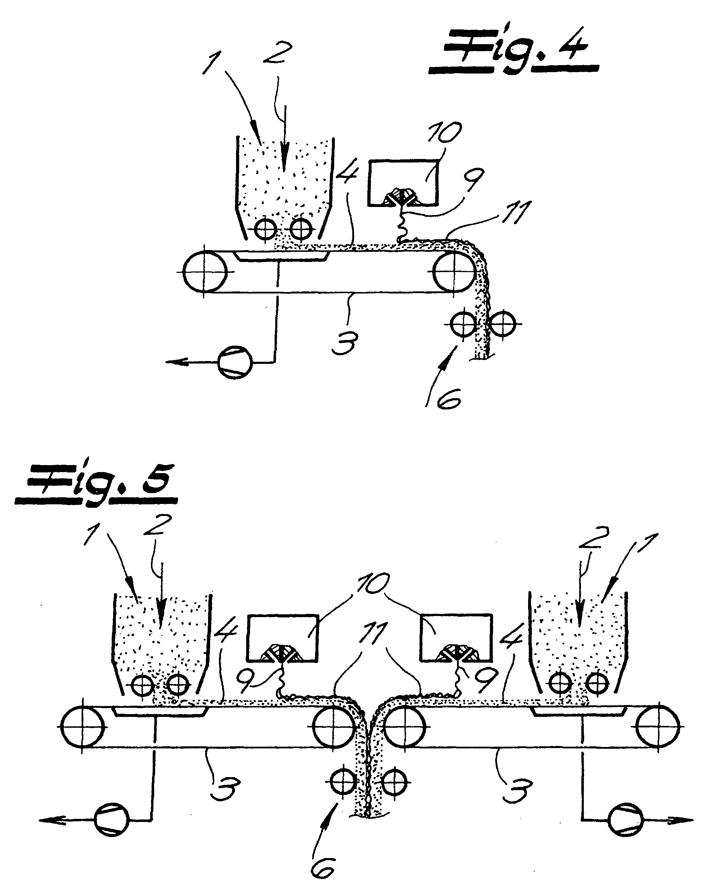

Nach der in Fig. 4 dargestellten Ausführung des erfindungsgemäßen Verfahrens wird das auf dem Transportband 3 aufliegende Fasermaterial 4 mit Meltblown-Fasern 9 beschichtet, die aus einem oberhalb des Transportbandes 3 angeordneten Meltblown-Balken 10 austreten und unter Bildung eines elastischen Vliesstoffes 11 auf dem Fasermaterial 4 abgelegt werden. Die elastischen Fasern des Vliesstoffes 11 bestehen vorzugsweise aus einem thermoplastischen Elastomer oder einem thermoplastischen Polyurethan. Durch den Auftrag der noch heißen, thermoplastifizierten Fasern entsteht ein fester Verbund zwischen aus den Kurzfasern 1 bestehenden Schicht und dem elastischen Träger, der durch die Ablage des Vliesstoffes 11 gebildet wird. Das Verbundmaterial zeichnet sich durch Elastizität, gute Atmungsaktivität und einen textilen Charakter aus.

Das Ausführungsbeispiel der Fig. 5 schließt an das Verfahren gemäß Fig. 4 an. Bei der in Fig. 5 dargestellten Ausführung des erfindungsgemäßen Verfahrens werden zwei Bahnen aus jeweils einem elastischen Vliesstoff 11 und einer aus den Kurzfasern 1 bestehenden Deckschicht zusammengeführt, wobei die Vliesstoffseiten miteinander verbunden werden.

## Patentansprüche

1. Verfahren zur Herstellung einer Bahn aus einem elastischen Verbundmaterial mit textiler Oberfläche, wobei
Kurzfasern mit einer Faserlänge von weniger als 6 mm in einem Luftstrom auf einem luftdurchlässigen Transportband zu einem Fasermaterial mit einem Auftragsgewicht zwischen 2 und 20 g/m² abgelegt werden und
ein elastischer Träger, der in mindestens einer Richtung um mehr als 50 % elastisch dehnbar ist, mit dem auf dem Transportband aufliegenden Fasermaterial verbunden wird.

2. Verfahren nach Anspruch 1, **dadurch gekennzeichnet, dass** der elastische Träger auf beiden Seiten mit Fasermaterial beschichtet wird, das mit einem Auftragsgewicht zwischen 2 und 20 g/m² auf luftdurchlässigen Transportbändern abgelegt wird und auf den Transportbändern beiden Seiten des Trägers zugeführt wird.

3. Verfahren nach Anspruch 1 oder 2, **dadurch gekennzeichnet, dass** für das Fasermaterial Kurzfasern mit einer Faserlänge von weniger als 2 mm verwendet wird.

4. Verfahren nach einem der Ansprüche 1 bis 3, **dadurch gekennzeichnet, dass** für das Fasermaterial Naturfasern, Kunstfasern oder Fasermischungen aus Natur- und Kunstfasern verwendet werden.

5. Verfahren nach einem der Ansprüche 1 bis 4, **dadurch gekennzeichnet, dass** das Fasermaterial punktförmig mit dem elastischen Träger verbunden wird.

6. Verfahren nach einem der Ansprüche 1 bis 5, **dadurch gekennzeichnet, dass** als elastischer Träger eine Folienbahn verwendet wird, die von einer Rolle abgezogen und mit dem auf dem Transportband aufliegenden Fasermaterial verklebt oder thermisch verbunden wird.

7. Verfahren nach Anspruch 6, **dadurch gekennzeichnet, dass** die elastische Trägerfolie ein- oder beidseitig mit einem Meltblown-Vliesstoff aus elastischen Fasern kaschiert wird, der zwischen der elastischen Trägerfolie und dem aus Kurzfasern bestehenden Fasermaterial angeordnet ist.

8. Verfahren nach Anspruch 6 oder 7, **dadurch gekennzeichnet, dass** eine perforierte Folienbahn verwendet wird.

9. Verfahren nach einem der Ansprüche 1 bis 5, **dadurch gekennzeichnet, dass** als Träger ein elastischer Vliesstoff verwendet wird.

10. Verfahren nach Anspruch 9, **dadurch gekennzeichnet, dass** ein Vliesstoff aus Meltblown-Fasern verwendet wird, wobei die Fasern aus thermoplastischen Elastomeren oder thermoplastischen Polyurethanen bestehen.

11. Verfahren nach Anspruch 9 oder 10, **dadurch gekennzeichnet, dass** als Träger ein vorgefertigter elastischer Vliesstoff verwendet wird, der von einer Rolle abgezogen und mit dem auf dem Transportband aufliegenden Fasermaterial verklebt oder thermisch verbunden wird.

12. Verfahren nach Anspruch 9 oder 10, **dadurch gekennzeichnet, dass** das auf dem Transportband aufliegende Fasermaterial mit Meltblown-Fasern beschichtet wird, die aus einem oberhalb des Transportbandes angeordneten Meltblown-Balken austreten und unter Vliesstoffbildung auf dem Fasermaterial abgelegt werden.

13. Verfahren nach Anspruch 12, **dadurch gekennzeichnet, dass** zwei Bahnen aus jeweils einem elastischen Vliesstoff und einer aus den Kurzfasern bestehenden Deckschicht zusammengeführt werden, wobei die Vliesstoffseiten miteinander verbunden werden.

## Claims

1. A method for the manufacture of a strip from an elastic composite material with textile surface, whereby:
short fibres with a fibre length of less than 6 mm are deposited in an air flow on an air-permeable conveyor belt to form a fibre material with an application weight of between 2 and 20 g/m², and
an elastic carrier, which is elastically extendible in at least one direction by more than 50 %, is connected to the fibre material lying on the conveyor belt.

2. The method according to Claim 1, **characterised in that** the elastic carrier is coated on both sides with fibre material, which is deposited with an application weight of between 2 and 20 g/m² on an air-permeable conveyor belt and is conducted on the conveyor belts on both sides of the carrier.

3. The method according to Claim 1, **characterised in that** short fibres are used for the fibre material, with a fibre length of less than 2 mm.

4. The method according to one of Claims 1 to 3, **characterised in that** natural fibres, artificial fibres, or fibre mixtures of natural and artificial fibres are used for the fibre material.

5. The method according to one of Claims 1 to 4, **characterised in that** the fibre material is connected at points to the elastic carrier.

6. The method according to one of Claims 1 to 5, **characterised in that** a film strip is used as the elastic carrier, which is drawn from a roll and is adhesively or thermally bonded to the fibre material lying on the conveyor belt.

7. The method according to Claim 6, **characterised in that** the elastic carrier film is embossed on one side or both sides with a melt-blown non-woven fleece material made of elastic fibres, which is arranged between the elastic carrier film and the fibre material consisting of short fibres.

8. The method according to Claim 6 or 7, **characterised in that** a perforated film strip is used.

9. The method according to one of Claims 1 to 5, **characterised in that** an elastic non-woven fleece material is used as the carrier.

10. The method according to Claim 9, **characterised in that** a non-woven fleece material made from melt-blown fibres is used, whereby the fibres consist of thermoplastic elastomers or thermoplastic polyurethanes.

11. The method according to Claim 9 or 10, **characterised in that** a prefabricated elastic non-woven fleece material is used as the carrier, which is drawn from a roll, and is adhesively or thermally bonded to the fibre material lying on the conveyor belt.

12. The method according to Claim 9 or 10, **characterised in that** the fibre material lying on the conveyor belt is coated with melt-blown fibres, which emerge from a melt-blown beam arranged above the conveyor belt and are deposited on the fibre material, so forming a non-woven fleece material.

13. The method according to Claim 11, **characterised in that** two strips, in each case of an elastic non-woven fleece material and a cover layer consisting of the short fibres, are brought together, whereby the non-woven fleece material sides are connected to one another.

## Revendications

1. Procédé de fabrication d'une bande constituée d'un matériau composite élastique avec une surface textile, selon lequel
- des fibres courtes d'une longueur de moins de 6 mm sont déposées dans un courant d'air sur une bande transporteuse perméable à l'air pour former un matériau fibreux, avec un poids d'application compris entre 2 et 20 g/m², et
- un support élastique, extensible élastiquement de plus de 50% dans au moins une direction, est assemblé avec le matériau fibreux reposant sur la bande transporteuse.

2. Procédé suivant la revendication 1, **caractérisé en ce que** le support élastique est revêtu des deux côtés du matériau fibreux, qui est déposé avec un poids d'application compris entre 2 et 20 g/m² sur des bandes transporteuses perméables à l'air et envoyé sur les bandes aux deux côtés du support.

3. Procédé suivant l'une des revendications 1 ou 2, **caractérisé en ce que** des fibres courtes d'une longueur de moins de 2 mm sont utilisées pour le matériau fibreux.

4. Procédé suivant l'une des revendications 1 à 3, **caractérisé en ce que** des fibres naturelles, des fibres synthétiques ou des mélanges de fibres naturelles et de fibres synthétiques, sont utilisés pour le matériau fibreux.

5. Procédé suivant l'une des revendications 1 à 4, **caractérisé en ce que** le matériau fibreux est assemblé par points avec le support élastique.

6. Procédé suivant l'une des revendications 1 à 5, **caractérisé en ce qu'**une feuille en bande est utilisée comme support élastique, laquelle bande est tirée d'un rouleau et collée ou assemblée thermiquement avec le matériau fibreux reposant sur la bande transporteuse.

7. Procédé suivant la revendication 6, **caractérisé en ce que** la feuille support élastique est doublée sur un ou deux côtés d'une étoffe nappée meltblown en fibres élastiques, qui est disposée entre la feuille support élastique et le matériau fibreux constitué de fibres courtes.

8. Procédé suivant l'une des revendications 6 et 7, **caractérisé en ce qu'**une bande de feuille perforée est utilisée.

9. Procédé suivant l'une des revendications 1 à 5, **caractérisé en ce qu'**une étoffe nappée élastique est utilisée comme support.

10. Procédé suivant la revendication 9, **caractérisé en ce qu'**une étoffe nappée en fibres meltblown est utilisée, les fibres se composant d'élastomères thermoplastiques ou de polyuréthannes thermoplastiques.

11. Procédé suivant l'une des revendications 9 ou 10, **caractérisé en ce qu'**une étoffe nappée élastique préfabriquée est utilisée comme support, laquelle étoffe est tirée d'un rouleau et collée ou assemblée thermiquement avec le matériau fibreux reposant sur la bande transporteuse.

12. Procédé suivant l'une des revendications 9 ou 10, **caractérisé en ce que** le matériau fibreux reposant sur la bande transporteuse est revêtu de fibres meltblown, qui sortent d'une poutrelle meltblown disposée au-dessus de la bande transporteuse et sont déposées sur le matériau fibreux en formant l'étoffe nappée.

13. Procédé suivant la revendication 12, **caractérisé en ce que** deux bandes constituées chacune d'une étoffe nappée élastique et d'une couche de recouvrement en fibres courtes sont réunies, les côtés de l'étoffe nappée étant assemblés entre eux.
